# EUROPEAN PATENT APPLICATION

(11) **EP 2 479 475 A1**
(43) Date of publication of application: **25.07.2012**
(21) Application number: 10816959.0
(22) Date of filing: 12.07.2010
(51) Int. Cl.: F21S 2/00, F21V 29/00, G02F 1/1333, G02F 1/13357, F21Y 103/00, F21Y 103/025

(54) **LIGHTING DEVICE, DISPLAY DEVICE, AND TELEVISION RECEIVER**

(30) Priority: 15.09.2009 JP 2009213479
(71) Applicant: Sharp Kabushiki Kaisha, Osaka-shi, Osaka 545-8522 (JP)
(72) Inventor: KUROMIZU, Yasumori, Osaka-shi, Osaka 545-8522 (JP)
(74) Representative: Müller-Boré & Partner Patentanwälte
(86) International application number: PCT/JP2010/061765
(87) International publication number: WO 2011/033846

(57) **Abstract**

A lighting device includes a hot cathode tube 17, a chassis 14 housing the hot cathode tube 17, and an inverter board 26 configured to supply driving power to the hot cathode tube 17. The hot cathode tube 17 has a glass tube 17a, a filament 17d arranged inside the glass tube 17a, and a ferrule 17b connecting the filament 17d and the inverter board 26 to each other. The ferrule 17b is exposed to the outside of the chassis 14. The lighting device further includes a heat dissipation member 50 configured to dissipate heat from the glass tube 17a to the chassis 14. The heat dissipation member 50 is provided between the glass tube 17a and the chassis 14, and is in contact with the outer circumferential surface of the glass tube 17a at a portion between the filament 17d and the ferrule 17b.

## Description

### TECHNICAL FIELD

The present invention relates to a lighting device, a display device and a television receiver.

### BACKGROUND ART

A liquid crystal panel used for, for example, a liquid crystal display device such as a liquid crystal television set does not emit light, and therefore requires a backlight unit separately as a lighting device. This backlight unit is configured to be installed on the back side (the side opposite to the side having the display surface) of the liquid crystal panel. The backlight unit includes a chassis, a face of which toward the liquid crystal panel is open; and a light source housed in the chassis (Patent Document 1 mentioned below). For example, a discharge tube such as a cathode-ray tube is used as a light source of a backlight unit configured as described above.

Patent Document 1: Japanese Unexamined Patent Publication No. 2006-114445

### Problem to be Solved by the Invention

The brightness of a discharge tube in general changes as the ambient temperature changes. This is because, as the ambient temperature changes, the temperature of a spot (the coldest spot) that has the lowest temperature inside the tube changes, resulting in a change in vapor pressure of mercury enclosed in the tube, which further changes luminous efficiency. Specifically, while the brightness is the highest when the temperature of the coldest spot is at a particular temperature (an appropriate temperature), the brightness decreases when the temperature of the coldest spot becomes either above or below the appropriate temperature. Therefore, when the ambient temperature rises as the discharge tube produces heat while being switched on, the coldest spot is brought above the appropriate temperature, which invites a risk that the brightness decreases.

### DISCLOSURE OF THE PRESENT INVENTION

The present invention was made in view of the foregoing circumstances, and aims at providing a lighting device configured to prevent the brightness thereof from decreasing due to temperature, and a display device and a television receiver that use the lighting device.

### Means for Solving the Problem

In order to solve the above problem, a lighting device according to the present invention includes: a discharge tube; a chassis configured to house the discharge tube; and a power source configured to supply driving power to the discharge tube. The discharge tube includes a tube section, an electrode arranged inside the tube section, and a power source connection section connecting the electrode and the power source to each other. The power source connection section is exposed to the outside of the chassis. The lighting device further includes a heat dissipation member configured to dissipate heat from the tube section to the chassis. The heat dissipation member is provided between the tube section and the chassis, and is in contact with the outer circumferential surface of the tube section at a portion between the electrode and the power source connection section. According to the present invention, the lighting device is configured to have the power source connection section exposed to the outside of the chassis. Heat dissipation from the power connection section is thereby facilitated, and this decreases the temperature of the vicinity of the power source connection section during the lighting of the lighting device. Consequently, a spot (the coldest spot) that has the lowest temperature inside the tube section comes to exist in the vicinity of the power source connection section. Additionally, in the present invention, the heat dissipation member is provided between the tube section and the chassis, and is in contact with the outer circumferential surface of the tube section at a portion between the electrode and the power source connection section. Therefore, heat produced by the electrode while the discharge tube is switched on is dissipated to the chassis via the heat dissipation member. Consequently, as compared to a configuration without having any heat dissipation member, this configuration can further lower the temperature of the coldest spot existing in the vicinity of the power source connection section. Based on the above, decrease in brightness that is caused by an increase in temperature of the coldest spot can be prevented. Note that conditions where "the power source connection section is exposed to the outside of the chassis" include a condition where at least a part of the power source connection section is exposed to the outside of the chassis.

In the above configuration, the power source connection section may include a plurality of power source sections each of which is attached to each of two ends of the tube section in an axial direction thereof. The power source connection section provided on at least one of the two ends of the tube section may be exposed to the outside of the chassis.

The discharge tube may include a plurality of discharge tubes that is arranged in parallel with each other in the chassis, and the discharge tubes may include first discharge tubes and second discharge tubes. Each power source connection section provided on one end of the first discharge tube may be projected from one end of the chassis in a width direction of the chassis and exposed to the outside of the chassis. Each power source connection section provided on another end of the second discharge tube may be projected from another end of the chassis in the width direction of the chassis and exposed to the outside of the chassis. The first discharge tubes and the second discharge tubes may be alternately arranged in parallel with each other.

Further, the discharge tube may include a plurality of discharge tubes that is arranged in parallel with each other in the chassis, and the discharge tubes may include a plurality of discharge tube groups each including at least two adjacent discharge tubes. The discharge tube groups may include a first discharge tube group and a second discharge tube group and the first discharge tube group and the second discharge tube group are alternately arranged in parallel with each other. The power source connection sections of the first discharge tube group that are provided on one ends of the discharge tubes of the first discharge tube group may project from one end of the chassis in a width direction of the chassis and may be exposed to the outside of the chassis. The power source connection sections of the second discharge tube group that are provided on anther ends of the discharge tubes of the second discharge tube group may project from another end of the chassis in the width direction and are exposed to the outside of the chassis.

Further, the discharge tube may include a plurality of discharge tubes that is arranged in parallel with each other in the chassis, and each power source connection section of each of the discharge tubes may project from one end of the chassis in a width direction of the chassis and may be exposed to the outside of the chassis.

Further, the discharge tube may include a plurality of discharge tubes that is arranged in parallel with each other in the chassis. The power source connection section of only the discharge tube arranged in a middle portion of the chassis in an arrangement direction of the discharge tubes a may be exposed to the outside of the chassis. In a case where the discharge tubes are arranged in parallel with each other, the middle portion of the chassis in the arrangement direction of the discharge tubes tends to have highest temperature within the chassis. Therefore, it is particularly effective to keep the temperatures of the coldest spots by exposing the power source connection sections in the discharge tubes arranged in the middle portion. Note that a condition where the discharge tubes are arranged in the middle portion of the chassis in the arrangement direction of the discharge tubes implies a condition where another discharge tubes are arranged on either sides of the discharge tubes arranged in the middle portion.

Further, each of the power source connection sections provided on the two ends of the discharge tube may be exposed to the outside of the chassis.

Further, the tube section may be substantially L-shaped.

Further, the tube section may be substantially U-shaped.

Further, the tube section may be a meandering shape. As an example of the meandering shape, sigmoid shape may be illustrated.

Further, the chassis may have a cutout that penetrates a wall section of the chassis. The cutout may be provided as a tube attachment section to receive the tube section therethrough. The heat dissipation member may be provided between the tube section and an edge of the cutout. Attachment of the tube section into the cutout enables the power source connection section to be exposed to the outside of the chassis. The cutout may include a hole that is formed by cutting out a part of the wall section of the chassis and has a surrounding edge, and also a groove-like hole formed by cutting out a marginal portion of the wall section of the chassis. The cutout may have any form as long as it penetrates the wall of the chassis so as to be communicable between the inside and the outside of the chassis.

The cutout may be formed in a sidewall section of the wall section of the chassis.

The chassis may have a cutout that penetrates a bottom wall section of the chassis. The cutout may be provided as a tube attachment section to receive the tube section penetrating the cutout. The heat dissipation member may be provided between the tube section and an edge of the cutout.

Further, the heat dissipation member may have a fitting groove configured to fit to the edge of the cutout. The fitting groove is fitted to the edge of the cutout. This configuration increases the contacting area between the chassis and the heat dissipation member and accelerates heat dissipation from the heat dissipation member to the chassis.

Further, the heat dissipation member may have a tube insertion hole that penetrates the heat dissipation member in the axial direction of the tube section. The tube section is inserted through the tube insertion hole. With this configuration, most of the circumferential portions of the tube section can be surrounded by the heat dissipation member. The contacting area between the tube section and the heat dissipation member is thereby increased. This accelerates heat dissipation from the tube section to the heat dissipation member. Additionally, because the tube section is surrounded by the heat dissipation member, the tube section can be protected.

Further, the tube insertion hole may be formed by cutting out an outer marginal portion of the heat dissipation member in a direction crossing the axial direction of the tube section. With this configuration, the tube section can be attached to the tube insertion hole in the direction crossing the axial direction of the tube section.

Further, the heat dissipation member may be made of silicone rubber. The heat dissipation member may be made of silicone rubber that is elastically deformable. This improves sealing ability between the heat dissipation member and the tube section and accelerates heat dissipation from the tube section to the heat dissipation member.

Further, a hot cathode tube may be used as the discharge tube. This achieves higher brightness.

Further, a cold cathode tube may be used as the discharge tube. This extends the life of the discharge tube and dimming is easily carried out.

Next, in order to solve the above problem, a display device of the present invention is characterized by including the above described lighting device, and a display panel configured to provide display by using light from the lighting device.

Further, a liquid crystal panel may be used as an example of the display panel. This type of display device may be applicable, as a liquid crystal display device, to various uses such as a television or a desktop of a personal computer. In particular, the display device is preferably used for a large screen.

Next, in order to solve the above problem, a television receiver of the present invention is characterized by including the above display device.

### Advantageous Effect of the Invention

According to the present invention, it is made possible to provide: a lighting device configured to prevent brightness thereof from decreasing due to temperature; and a display device and a television receiver that use the lighting device.

### BRIEF DESCRIPTION OF THE DRAWINGS

Fig. 1 is an exploded perspective view showing a schematic configuration of a television receiver according to Embodiment 1 of the present invention.
Fig. 2 is an exploded perspective view showing a schematic configuration of a liquid crystal display device included in the television receiver of Fig. 1.
Fig. 3 is a cross-sectional view showing a sectional configuration of the liquid crystal display device of Fig. 2, taken along a direction parallel to the short sides thereof.
Fig. 4 is a cross-sectional view showing a sectional configuration of the liquid crystal display device of Fig. 2, taken along a direction parallel to the long sides thereof.
FIG. 5 is an enlarged view showing an aspect in which a heat dissipation member has been attached to a hot cathode tube.
Fig. 6 is a schematic view showing an aspect in which the hot cathode tube is being attached to a chassis in Embodiment 1.
Fig. 7 is a schematic view showing an aspect in which the hot cathode tube has been attached to the chassis in Embodiment 1.
Fig. 8 is a graph showing relations between the brightness of the hot cathode tube and the ambient temperature.
Fig. 9 is a schematic view showing an aspect in which a hot cathode tube is being attached to a chassis in Embodiment 2.
Fig. 10 is a cross-sectional schematic view showing the configuration of a liquid crystal display device according to Embodiment 3.
Fig. 11 is a schematic view showing the configuration of a backlight unit according to Embodiment 4.
Fig. 12 is a schematic view showing the configuration of a backlight unit according to Embodiment 5.
Fig. 13 is a schematic view showing the configuration of a backlight unit according to Embodiment 6.
Fig. 14 is a schematic view showing the configuration of a backlight unit according to Embodiment 7.
Fig. 15 is a schematic view showing the configuration of a backlight unit according to Embodiment 8.
Fig. 16 is a schematic view showing the configuration of a backlight unit according to Embodiment 9.
Fig. 17 is a cross-sectional view showing an aspect in which only ferrules on one end of a hot cathode tube is exposed to the outside of the chassis.
Fig. 18 is a cross-sectional view showing an aspect in which a glass tube of a hot cathode tube is L-shaped.
Fig. 19 is a schematic view showing an aspect in which a glass tube of a hot cathode tube is U-shaped.

### BEST MODE FOR CARRYING OUT THE INVENTION

### <Embodiment 1>

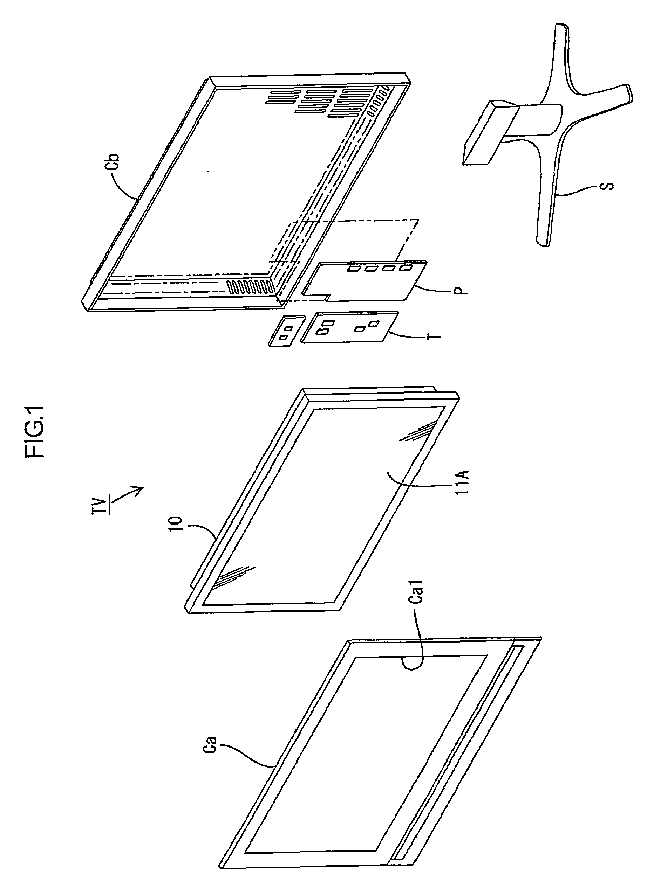

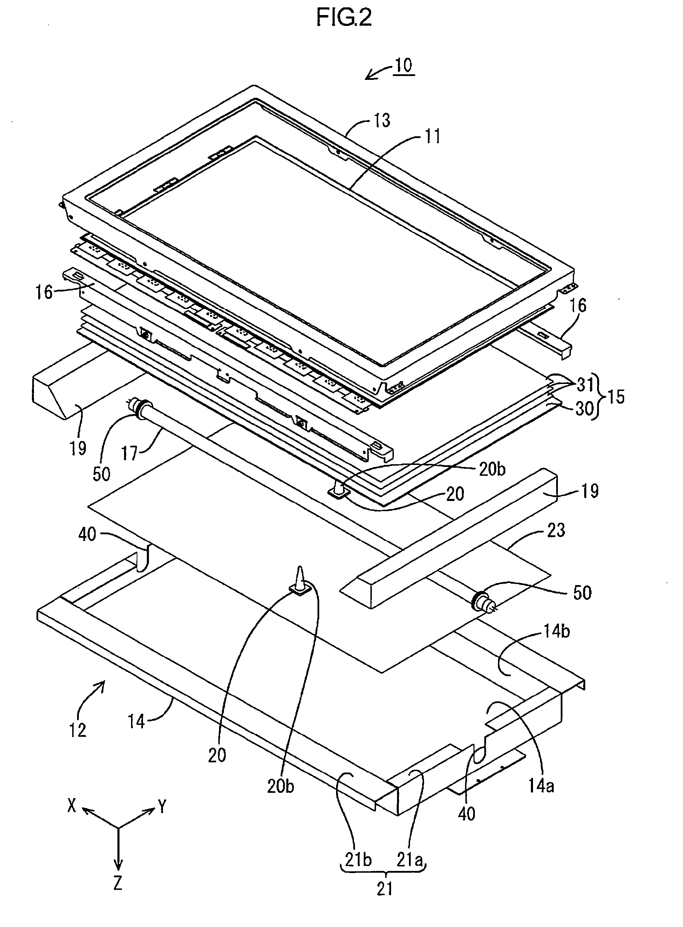

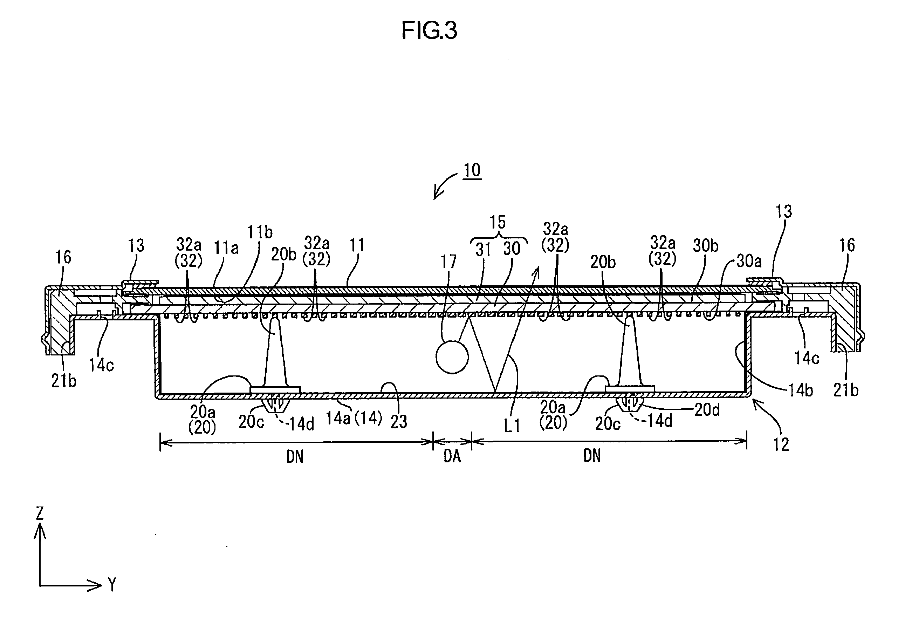

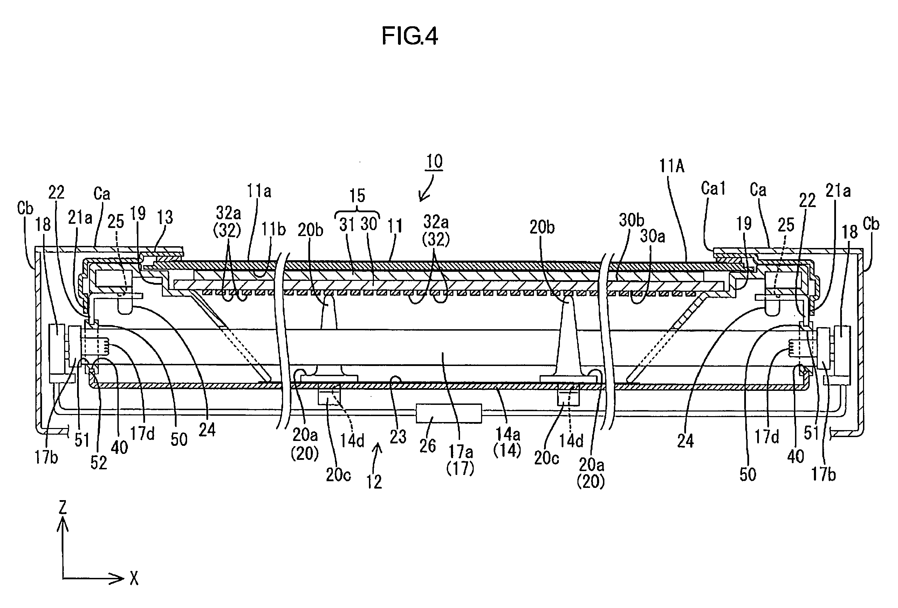

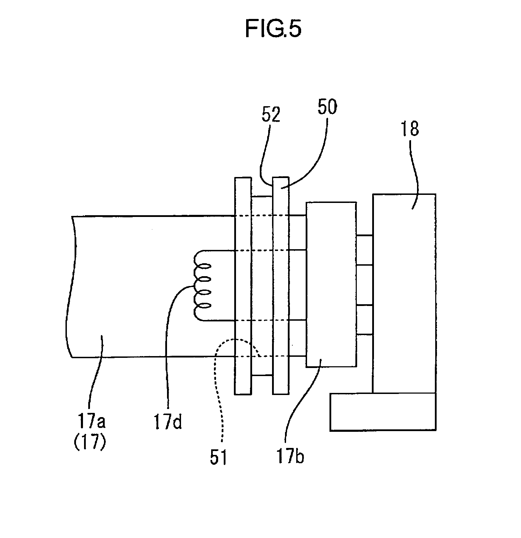

Embodiment 1 of the present invention is described with reference to Figs. 1 to 8. Firstly, the configuration of a television receiver TV including a liquid crystal display device 10 is described. Fig. 1 is an exploded perspective view showing a schematic configuration of the television receiver TV according to this embodiment; Fig. 2 is an exploded perspective view showing a schematic configuration of the liquid crystal display device included in the television receiver of Fig. 1; Fig. 3 is a cross-sectional view showing a sectional configuration of the liquid crystal display device of Fig. 2, taken along a direction parallel to the short sides thereof; and Fig. 4 is a cross-sectional view showing a sectional configuration of the liquid crystal display device of Fig. 2, taken along a direction parallel to the long sides thereof. Note that this description assumes that the X-axis direction represents a direction parallel to the long sides of the chassis, and that the Y-axis direction represents a direction parallel to the short sides of the chassis.

As shown in FIG. 1, the television receiver TV according to this embodiment is configured by including the liquid crystal display device 10, two front and back cabinets Ca and Cb, a power source P, a tuner T and a stand S, the cabinets Ca and Cb sandwiching and thus housing the liquid crystal display device 10. The cabinet Ca has an opening Ca1 through which to expose a display surface 11A of the liquid crystal panel 11. The liquid crystal display device 10 (display device) has a horizontally-long square shape (rectangular shape) as a whole and housed in a stand-up state. As shown in Fig. 2, this liquid crystal display device 10 includes a backlight unit 12 (a lighting device), which is an external light source, and a liquid crystal panel 11 (a display panel) for providing display by using light from the backlight unit 12. The liquid crystal display device 10 is configured such that these components are integrally supported via a frame-like bezel 13 and the like.

Next, the liquid crystal panel 11 and the backlight unit 12, which constitute the liquid crystal display device 10, are described. The liquid crystal panel 11 (a display panel) has a configuration obtained by joining together a pair of glass substrates with a predetermined gap therebetween and enclosing liquid crystal between the two glass substrates. Provided on one of the glass substrates are switching components (e.g., TFTs) each connected to a source line and a gate line that intersect at right angles, pixel electrodes connected to the switching components, an alignment film, and the like. Provided on the other glass substrate are a color filter, on which color sections each being of R (red), G (green), B (blue) or the like are arranged in a predetermined array, a counter electrode, an alignment film, and the like. Note that, as shown in FIG. 3, polarizing plates 11a and 11b are arranged on the outer sides of the two substrates.

As shown in Fig. 2, the backlight unit 12 includes: a chassis 14, which has an opening 14b in one side thereof having a light exiting surface (one side thereof facing the liquid crystal panel 11) and has a substantially boxlike shape; a group of optical members 15 (a diffuser plate 30, and a plurality of optical sheets 31 arranged between the diffuser plate 30 and the liquid crystal panel 11) arranged in a manner covering the opening 14b of the chassis 14; and frames 16 each arranged along a corresponding one of the long sides of the chassis 14, and supporting a long-side edge section of the diffuser plate 30 with the long-side edge section sandwiched between the chassis 14 and the frame 16.

In the inside of the chassis 14, a hot cathode tube 17 (a discharge tube), which is a light source, and holders 19, which cover end sections of the hot cathode tube 17, are housed. As shown in Fig. 3, in the central part of the inside of the chassis 14 in a direction parallel to the short sides thereof, the hot cathode tube 17 is arranged, as only one hot cathode tube, with the length direction (the axial direction) thereof agreeing with a direction parallel to the long sides of the chassis 14. The hot cathode tube 17 is attached to the chassis 14 via heat dissipation members 50 and opposite ends (ferrules 17b) of the hot cathode tube 17 project from the chassis 14 and are exposed to the outside thereof as shown in Fig. 4. This configuration will be described in detail below. Further, in the inside of the chassis 14, support pins 20 to support the optical members 15 from the back side (one side facing the hot cathode tube 17) thereof are provided. Note that, in the backlight unit 12, one side from the hot cathode tube 17 that faces the optical members 15 is the light exiting side.

The chassis 14 is made of metal. As shown in Figs. 3 and 4, the chassis 14 is composed of: a bottom panel 14a having a rectangular shape in a plan view; and folded outer marginal sections 21a and 21b standing up from the respective sides of the bottom panel 14a. Sheet-metal forming process is used in forming the chassis 14 into a shallow, substantially boxlike shape opening toward the front (in one side facing the light exiting face) . Each of the folded outer marginal sections 21a is folded inward and extends in the direction parallel to the short sides. Each of the folded outer marginal sections 21b is folded substantially into a U shape and extends in the direction parallel to the long sides. As shown in Fig. 3, fixing holes 14c are formed in the upper surfaces of the folded outer marginal sections 21b by drilling. Accordingly, the bezel 13, the frames 16, the chassis 14 and the like are integrally provided by means of, for example, screws or the like.

Each of the holders 19 covering the end sections of the hot cathode tube 17 is made of synthetic resin, the appearance of which is white, and, as shown in Fig. 2, has a long and narrow, substantially boxlike shape extending in the direction parallel to the short sides of the chassis 14. As shown in Fig. 4, each of the holders 19 has, on the front surface, a stepped surface by which the optical members 15 or the liquid crystal panel 11 may be placed on different steps. The holders 19 are arranged in a state partially overlapping with the folded outer marginal sections 21a extending in the direction parallel to the short sides of the chassis 14. The holders 19 thereby constitute, together with the folded outer marginal sections 21a, sidewalls of the backlight unit 12. Insertion pins 24 are provided on and project from surfaces of the holders 19 that face the folded outer marginal sections 21a of the chassis 14, which provides a configuration where the holders 19 are attached to the chassis 14 with the insertion pins 24 inserted into insertion holes 25 formed on the upper surfaces of the folded outer marginal sections 21a of the chassis 14.

A reflection sheet 23 is arranged on an internal surface (on a surface facing the hot cathode tube 17) of the bottom panel 14a of the chassis 14. The reflection sheet 23 is made of synthetic resin, assumes a white color having excellent light reflectance, and is laid down along the internal surface of the bottom panel 14a of the chassis 14 in a manner almost entirely covering the internal surface. As shown in Fig. 3, the long-side edges of the reflection sheet 23 stand up in a manner covering the folded outer marginal sections 21b of the chassis 14 and are set in a state sandwiched between the chassis 14 and the optical members 15. This reflection sheet 23 enables light emitted from the hot cathode tube 17 to be reflected toward the optical members 15.

As shown in Fig. 4, the optical members 15 have a rectangular shape in a plan view similarly to the liquid crystal panel 11 and the chassis 14. The optical members 15 is provided between the liquid crystal panel 11 and the hot cathode tube 17, and are composed of: the diffusion plate 30 placed in the back side (one side facing the hot cathode tube 17; opposite to the light exiting side) of the optical members 15; and optical sheets 31 arranged in the front side (one side facing the liquid crystal panel 11; the light emitting side) thereof. The diffusion plate 30 has a configuration obtained by dispersing a large number of diffusing particles in a substantially transparent base substrate having a predetermined thickness and made of resin. The diffusion plate 30 has the capability to diffuse light that transmits therethrough, and has a light reflecting capability to reflect light that is emitted from the hot cathode tube 17. The optical sheet 31 has a sheet-like shape having a thickness thinner than that of the diffusion plate 30. The optical sheet 31 is formed by laminating a diffusion sheet, a lens sheet and a reflection type polarizing sheet in order from the diffusion plate 30.

The support pins 20 are configured to support the diffusion plate 30 from the back side, and are made of synthetic resin (for example, made of polycarbonate). The overall appearances of the support pins 20 have a whitish color, such as white, which has excellent light reflectance. As shown in Figs. 2 to 4, each of these support pins 20 is composed of: a main body section 20a forming a plate-like shape following the bottom panel 14a of the chassis 14; a support section 20b projecting frontward (toward the optical member 15) from the main body section 20a; and an engagement section 20c projecting backward (toward the bottom panel 14a of the chassis 14) from the main body section 20a.

The engaging section 20c includes a pair of elastic engagement pieces, and carries the function of holding the support pin 20 with respect to the chassis 14 by being engaged with a hole perimeter on the back side of an attachment hole 14d after both of the elastic engagement pieces have been inserted through the attachment hole 14d provided in the chassis 14. The support section 20b as a whole has a conical shape, and is set to a length that allows the rounded apex thereof to abut on (or come close to) a surface on the back side of the diffusion plate 30. The support members 20b are thereby enabled to support the diffusion plate 30 from the back side, and minimize bending of the diffusion plate 30 when the diffusion plate 30 bends.

The diffusion plate 30 is formed by dispersedly blending a predetermined amount of diffusing particles that diffuse light into a substantially transparent base substrate made of synthetic resin (for example, made of polystyrene) . Thus, the light transmittance and the light reflectance of the diffusion plate 30 as a whole are made substantially uniform. Note that it is preferable to set specific values of the light transmittance and the light reflectance of the base substrate (excluding a light reflecting section 32 to be described later) of the diffusion plate 30 to around 70% and around 30%, respectively. The diffusion plate 30 has a surface (hereinafter referred to as a first surface 30a) facing the hot cathode tube 17, and another surface (hereinafter referred to as a second surface 30b) located on the side opposite to the side having the first surface 30a and facing the liquid crystal panel 11. This description assumes that, out of these surfaces, the first surface 30a is a light entering surface to which the light from the hot cathode tube 17 enters, whereas the second surface 30b is a light exiting surface from which light exits toward the liquid crystal panel 11.

Further, the light reflecting section 32, which forms a dotted pattern assuming a white color, is formed on the first surface 30a constituting the light-entering surface in the diffusion plate 30. The light reflecting section 32 is formed, for example, by arranging a plurality of dots 32a in a zigzag manner (in a zigzag alignment; in a staggered manner), the plurality of dots 32a each having a circular shape in a plan view. The dot pattern constituting the light reflecting section 32 is formed, for example, by being printed on the surface of the diffusion plate 30 with paste containing a metal oxide. Screen printing, ink-jet printing and the like are suitable as means for the printing.

The light reflecting section 32 itself is configured to have light reflectance of about 75% which is higher than the in-plane light reflectance of the diffusion plate 30 itself, which is set to, for example, about 30%. Here, this embodiment uses, as the light reflectance of each material, the average of light reflectance values within a measurement diameter, which are obtained by use of a LAV (with a measurement diameter ϕ at 25.4 mm) of CM-3700d manufactured by Konica Minolta Corporation. Note that a value for the light reflectance of the light reflecting section 32 itself is set to one obtained by forming the light reflecting section 32 all over one surface of the glass substrate and measuring, based on the above measurement means, the one surface having the light reflecting section 32 formed thereon.

The diffusion plate 30 is configured such that, with the dot pattern (the areas of the respective dots 32a) of the light reflecting section 32 being varied, the light reflectance of the first surface 30a facing the hot cathode tube 17 of the diffusion plate 30 is varied along the direction (the Y-axis direction) parallel to the short sides. That is, the diffusion plate 30 is configured such that, in the first surface 30a, the light reflectance of a part (hereinafter referred to as a light source overlapping section DA) overlapping with the hot cathode tube 17 is larger than the light reflectance of a part (hereinafter referred to as a light source non-overlapping section DN) not overlapping with the hot cathode tube 17. Note that the light reflectance of the first surface 30a of the diffusion plate 30 is made almost invariable and substantially uniform along the direction parallel to the long sides. For the purpose of obtaining the above described distribution in light reflectance, the areas of the respective dots 32a constituting the light reflecting section 32 are determined so that: the areas of the dots 32a in the central part, i.e., a part facing the hot cathode tube 17, of the diffusion plate 30 in a direction parallel to the short sides thereof can be the largest; the areas of the dots 32a can gradually decrease according to how far the respective dots 32a are from the central part; and the areas of the dots 32a in the most marginal part of the diffusion plate 30 in the direction parallel to the short sides thereof can be the smallest. In other words, the areas of the dots 32a are determined so as to gradually decrease according to how far the respective dots 32a are from the hot cathode tube 17.

The diffusion plate 30 having the above described configuration enables light emitted from the hot cathode tube 17 to: directly enter the first surface 30a of the diffusion plate 30, or indirectly enter the first surface 30a after being reflected by the reflection sheet 23, the holder 19, the support pin 20 and the like; then transmit through the diffusion plate 30; and, thereafter, exit toward the liquid crystal panel 11 through the optical sheets 31. Light directly entering from the hot cathode tube 17 accounts for a large portion of light in the light source overlapping section DA which overlaps with the hot cathode tube 17 in the first surface 30a of the diffusion plate 30 through which light emitted from the hot cathode tube 17 enter, whereby the quantity of light in the light source overlapping section DA is relatively large as compared to that in the light source non-overlapping section DN. Therefore, relatively raising the light reflectance of the light reflecting section 32 in the light source overlapping section DA results in reduction in light that enters the first surface 30a, whereby a large quantity of light is reflected and returned into the inside of the chassis 14.

On the other hand, in the first surface 30a, the light source non-overlapping section DN not overlapping with the hot cathode tube 17 receives a little quantity of light directly from the hot cathode tube 17, and the quantity of light therein is relatively smaller than that in the light source overlapping section DA. Therefore, relatively lowering the light reflectance of the light reflecting section 32 in the light source non-overlapping section DN makes it possible to promote entrance of light into the first surface 30a. At this time, light reflected into the inside of the chassis 14 by the light reflecting section 32 of the light source overlapping section DA is guided to the light source non-overlapping section DN by the reflection sheet 23 and the like (a ray L1 of Fig. 3), which supplements the quantity of light therein. This makes it possible to secure a sufficient quantity of light that enters the light source non-overlapping section DN.

As mentioned above, changing the reflectance of the diffusion plate 30 in the direction parallel to the short sides makes it possible both to obtain a configuration having the hot cathode tube 17 arranged only in the central part in the direction parallel to the short sides and to smoothen the distribution in brightness of illuminating light from the diffusion plate 30 as a whole, and thus makes it possible to achieve a smooth distribution in illumination brightness of the backlight unit 12 as a whole. Note that, as means to condition the light reflectance, another method may be used in which, while the areas of the respective dots 32a of the light reflecting section 32 are set equal to each other, intervals between the dots 32a are varied.

Next, the configuration of the hot cathode tube 17 and a structure for attachment of the hot cathode tube 17 to the chassis 14 are described. As shown in Figs. 3 and 4, the hot cathode tube 17 as a whole has a tubular shape (a linear shape), and includes a hollow glass tube 17a (a tube section), and the pair of ferrules 17b (power source connection sections) arranged on both end sections of the glass tube 17a. Mercury, rare gas and the like are enclosed in the glass tube 17a and a fluorescence material is applied to the inner wall surface thereof. To the respective ferrules 17b, filaments 17d (electrodes) arranged inside the glass tube 17a are connected. Note that, in general, the outer diameter size of the hot cathode tube 17 is large as compared to the outer diameter size (for example, about 4 mm) of the cold cathode tube, and is set to, for example, about 15.5 mm.

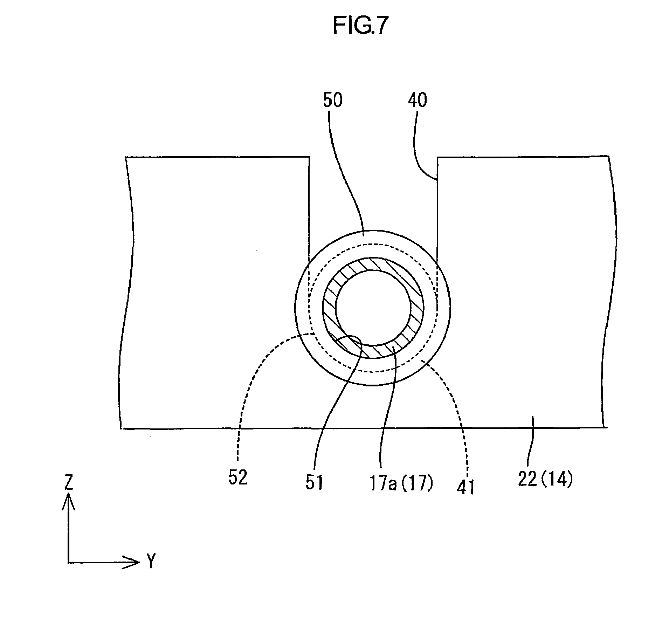

As shown in Fig. 4, a cutout 40 is formed in each of sidewalls 22 (a wall section of the chassis) that constitute the folded outer marginal sections 21a on both sides of the chassis 14 in the longitudinal direction (the X-axis direction) thereof. As shown in Fig. 7, the cutout 40 has a groove-like shape obtained by cutting out a marginal section of the sidewall 22 from the front side (the side facing the light exiting surface, or the upper side in Fig. 7), and penetrates the sidewall 22 (sidewall section) in the direction parallel to the long sides. The hot cathode tube 17 is inserted through the cutout 40 and attached to the cutouts 40 via the heat dissipation members 50 with the cutouts 40. That is, the cutouts 40 are provided as tube attachment sections. Both of the ferrules 17b of the hot cathode tube 17 project from the chassis 14 and are exposed to the outside of the chassis 14 through the cutouts 40. Note that, as shown in FIG. 4, both of the ferrules 17b are housed in the two front and back cabinets Ca and Cb and protected.

Each of the heat dissipation members 50 is arranged between a corresponding one of the cutout 40 and the hot cathode tube 17 and dissipates heat from the hot cathode tube 17 toward the chassis 14. The heat dissipation member 50 is made of, for example, silicone rubber. As shown in FIG. 7, the heat dissipation member 50 has an annular shape having a tube insertion hole 51 formed inside, and is elastically deformable in the diametric direction thereof. While the inner diameter of the tube insertion hole 51 is set substantially equal to or slightly smaller than the outer diameter of the glass tube 17a, the glass tube 17a can be inserted through the tube insertion hole 51 in the axial direction of the glass tube 17a. As shown in FIG. 4, this embodiment has a configuration where: the glass tube 17a is inserted through the tube insertion holes 51; and the inner circumferential surface of each of the heat dissipation members 50 is in contact with the outer circumferential surface of the glass tube 17a at a position between corresponding ones of the filaments 17d and the ferrules 17b in the axial direction (the X-axis direction) of the hot cathode tube 17.

Note that, in the above configuration, when the glass tube 17a is inserted into the tube insertion hole 51 in a case where the inner diameter of the tube insertion hole 51 is set slightly smaller than the outer diameter of the glass tube 17a, the tube insertion hole 51 elastically deforms in a direction such that the diameter thereof is enlarged. This makes it possible to further tighten contact between the outer circumferential surface of the glass tube 17a and the inner circumferential surface of the heat dissipation member 50, and to further facilitate heat dissipation from the glass tube 17a to the heat dissipation member 50.

The outer diameter A2 of the heat dissipation member 50 is set greater than a width A1 of the cutout 40 in the Y-axis direction. A fitting groove 52 extending all over the circumference of the heat dissipation member 50 is concavely provided on the outward surface (the circumferential surface) thereof in the diametric direction thereof. A groove width of the fitting groove 52 is set slightly smaller than (or substantially equal to) the thickness of the sidewall 22, and the fitting groove 52 is enabled to fit in with a hole edge 41 of the cutout 40. According to the above described configuration, both of the ferrules 17b are projected and exposed to the outside of the chassis 14 and the heat dissipation members 50 are in contact with both of the chassis 14 (more specifically, the hole edges 41 of the cutouts 40) and the hot cathode tube 17 (the glass tube 17a) .

Sockets 18 are attached to the respective ferrules 17b of the hot cathode tube 17 and the filaments 17d are connected via the sockets 18 to an inverter board 26 (a power source) that is attached to the outward surface (the back side) of the bottom panel 14a of the chassis 14. In other words, each of the ferrules 17b is a power source connection section connecting a corresponding one of the filaments 17d and the inverter board 26 to each other. Driving power is supplied to the hot cathode tube 17 from the inverter board 26 and the inverter board 26 is enabled to control a tube current value, namely, brightness (the lighting state) .

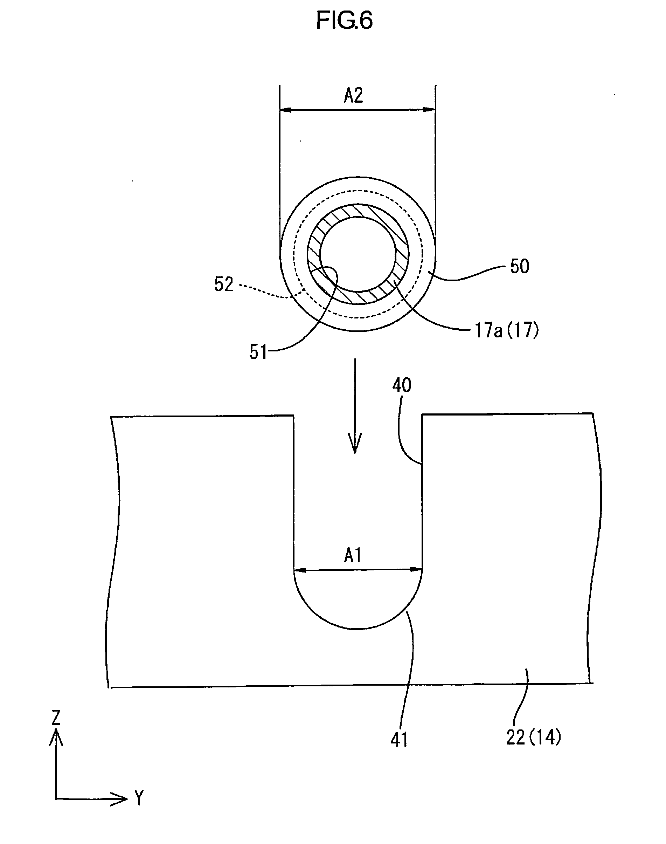

Next, a procedure for attachment of the hot cathode tube 17 to the chassis 14 is described. First of all, the respective heat dissipation members 50 are attached to both ends of the hot cathode tube 17. Specifically, the hot cathode tube 17 is inserted into the tube insertion holes 51 of the respective heat dissipation members 50, whereby each of the heat dissipation members 50 is attached on the outer circumferential surface of the glass tube 17a. The heat dissipation member 50 is provided between the filament 17d and the ferrule 17b. Consequently, the outer circumferential surface of the hot cathode tube 17 and the inner circumferential surface of each of the heat dissipation members 50 are in contact with each other. Then, as shown in FIG. 6, the respective heat dissipation members 50 are inserted from the front side (the open side of the chassis 14) to the corresponding cutouts 40, and the fitting grooves 52 of the respective heat dissipation members 50 are fit in with the hole perimeters 41 of the cutouts 40. Consequently, the glass tube 17a is attached to both of the cutouts 40 via the heat dissipation members 50, and the respective ferrules 17b at both ends of the glass tube 17a are arranged in a state exposed to the outside of the chassis 14, as shown in FIG. 4.

Next, the operation and effect obtained when the hot cathode tube 17 is lighted on in the backlight unit 12 of this embodiment are described. First of all, when driving power is supplied from the inverter board 26 to the hot cathode tube 17, electricity is discharged from the filaments 17d of the hot cathode tube 17. Consequently, inside the glass tube 17a, electrons collide with mercury enclosed therein, and, as a result, mercury is activated, whereby ultraviolet rays are radiated. These ultraviolet rays activate the fluorescence material applied to the inner wall surface of the glass tube 17a, whereby visible light is emitted.

As mentioned above, during lighting of the hot cathode tube 17, temperatures inside the glass tube 17a and around the glass tube 17a rise due to heat generation (particularly, heat generation from the filaments 17d) at the time of current passage. Since this embodiment uses a configuration where the ferrules 17b of the hot cathode tube 17 are exposed to the outside of the chassis 14, heat dissipation from the ferrules 17b is facilitated, whereby spots (the coldest spots) that have the lowest temperatures inside the glass tube 17a come to exist in the vicinities of the ferrules 17b. Therefore, the temperatures of the coldest spots during lighting are lower than in a configuration where the ferrules 17b are housed inside the chassis 14 which retains heat therein. Further, in this embodiment, each of the heat dissipation members 50 is provided between the glass tube 17a and the chassis 14 and is in contact with the outer circumferential surface of the glass tube 17a at a portion between the filament 17d and the ferrule 17b. Therefore, heat transferred from the filament 17d to the ferrule 17b is partially dissipated to the chassis 14 via the heat dissipation member 50. Consequently, it is possible to decrease the temperature of the vicinity (in other words, a position that is closer to an end of the glass tube 17a in the axial direction thereof than the filament 17d) of the ferrule 17b inside the glass tube 17a. Based on the above, it is possible to prevent rise in temperature of the coldest spot inside the glass tube 17a.

The temperature of the coldest spot influences a vapor pressure of mercury enclosed in the glass tube 17a, and, by extension, influences the brightness of the hot cathode tube 17. Specifically, as the vapor pressure of mercury rises as the temperature of the coldest spot rises, the amount of ultraviolet rays released from the mercury increases, and the light emission efficiency thereby increases. As the vapor pressure of the mercury rises as the temperature of the coldest spot further rises, the amount of ultraviolet rays released by mercury and then reabsorbed by mercury around the foregoing mercury increases. Then, the amount of ultraviolet rays that hit the fluorescence material decreases, and this decrease impairs the light emission efficiency and decreases the brightness. That is, the hot cathode tube 17 has a characteristic such that, while the brightness thereof is the highest when the temperature of the coldest spot is a certain temperature (appropriate temperature), the brightness decreases as the temperature of the coldest spot becomes either higher or lower than this appropriate temperature. Further, the temperature of the coldest spot rises as the temperature (ambient temperature) of a place in which the hot cathode tube 17 is placed increases.

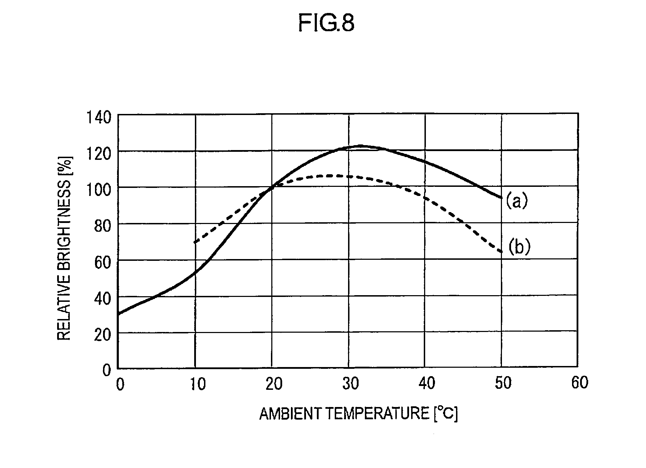

Fig. 8 is a graph showing relations between the temperature (ambient temperature) inside the chassis 14 and the brightness of the hot cathode tube 17. In FIG. 8, a solid line (a) indicates the brightness of the hot cathode tube 17 in the configuration of this embodiment. On the other hand, a dotted line (b) indicates the brightness of the hot cathode tube 17 in the configuration of a comparative example. This comparative example assumes a configuration not including the heat dissipation members 50 while having the ferrules 17b of the hot cathode tube 17 exposed to the outside of the chassis 14 through the cutout 40. That is, a state of this example is such that none of the heat dissipation members 50 is interposed, and a gap therefore exists, between each of the end sections (the vicinities of the ferrules 17b) of the hot cathode tube 17 and the chassis 14. Note that the brightness therein is represented in terms of relative brightness obtained when the brightness in the configuration of (b), which is measured under the condition that the ambient temperature is 20-°C, is used as a standard (100%).

Based on FIG. 8, it is found that the configuration (a) of this embodiment shows higher brightness than the configuration (b) of the comparative example under the condition that the ambient temperature is high (20ºC or higher). This is because, in this embodiment, provision of the heat dissipation members 50 between the hot cathode tube 17 and the chassis 14 further facilitates heat dissipation from the vicinities of the ferrules 17b, and further prevents the temperature of the coldest spots from increasing as the ambient temperature rises. In the configuration of the present embodiment, the brightness is the highest when the ambient temperature is around 30ºC. Under a normal use environment of the television receiver TV, the temperature (ambient temperature) inside the chassis 14 is about 30ºC. Therefore, the configuration of this embodiment provides the highest brightness in the normal use environment, and is preferable.

According to the present embodiment, the ferrules 17b of the hot cathode tube 17 are exposed from the chassis 14. Heat dissipation from the ferrules 17b is thereby facilitated and this lowers the temperatures of the vicinities of the ferrules 17b during lighting of the hot cathode tube 17. Consequently, the spots (the coldest spots) that have the lowest temperatures inside the glass tube 17a come to exist in the vicinities of the ferrules 17b. Additionally, in this embodiment, each of the heat dissipation members 50 is provided between the glass tube 17a and the chassis 14, and is in contact with the outer circumferential surface of the glass tube 17a at a portion between the filament 17d and the ferrule 17b. Therefore, heat generated from the filaments 17d during lighting of the hot cathode tube 17 can be dissipated to the chassis 14 via the heat dissipation members 50. This lowers the temperatures of the coldest spots set in the vicinities of the ferrules 17b as compared to a configuration without using the heat dissipation members 50. This prevents the brightness from decreasing due to increase in temperature of the coldest spot.

Additionally, the cutouts 40 penetrating the sidewalls 22 of the chassis 14 are formed. The cutouts 40 are provided as tube attachment sections configured to attach the glass tube 17a to the cutouts 40 with the glass tube 17a penetrating through the cutouts 40. The glass tube 17a is attached in the cutouts 40 and accordingly the ferrules 17b are exposed to the outside of the chassis 14.

Further, the respective heat dissipation members 50 have the fitting grooves 52 configured to fit in with the hole e edges 41 of the cutouts 40. The fitting grooves 52 are fit in with the hole edges 41 of the cutouts 40, and this increases the contacting area between each of the heat dissipation members 50 and the chassis 14 and facilitates heat dissipation from the heat dissipation member 50 to the chassis 14. This also fixes the heat dissipation members 50 and the hot cathode tube 17 to the chassis 14 more reliably.

Additionally, the heat dissipation members 50 have the tube insertion holes 51 formed so as to penetrate the heat dissipation members 50 in the axial direction of the glass tube 17a. The glass tube 17a are thus inserted through the tube insertion holes 51, and accordingly most of the circumferential portion of the glass tube 17a can be surrounded by the heat dissipation members 50. The contacting area between the glass tube 17a and the heat dissipation member 50 is thereby enlarged, and improved heat dissipation performance is achieved. Further, since the glass tube 17a is surrounded by the heat dissipation members 50, the glass tube 17a is protected.

Further, the tube insertion holes 51 are formed by cutting out outer marginal portions of the heat dissipation members 50 in a direction crossing the axial direction of the glass tube 17a. With this configuration, the glass tube 17a is attached to the tube insertion holes 51 from the direction crossing the axial direction of the glass tube 17a.

Further, each of the heat dissipation members 50 is made of silicone rubber. The heat dissipation member 50 is made of silicone rubber that is elastically deformable, and this improves sealing ability between the heat dissipation member 50 and the glass tube 17a and facilitates heat dissipation from the glass tube 17a to the heat dissipation member 50.

Further, the hot cathode tube 17 is used as a discharge tube. With this configuration, higher brightness is achieved.

### <Embodiment 2>

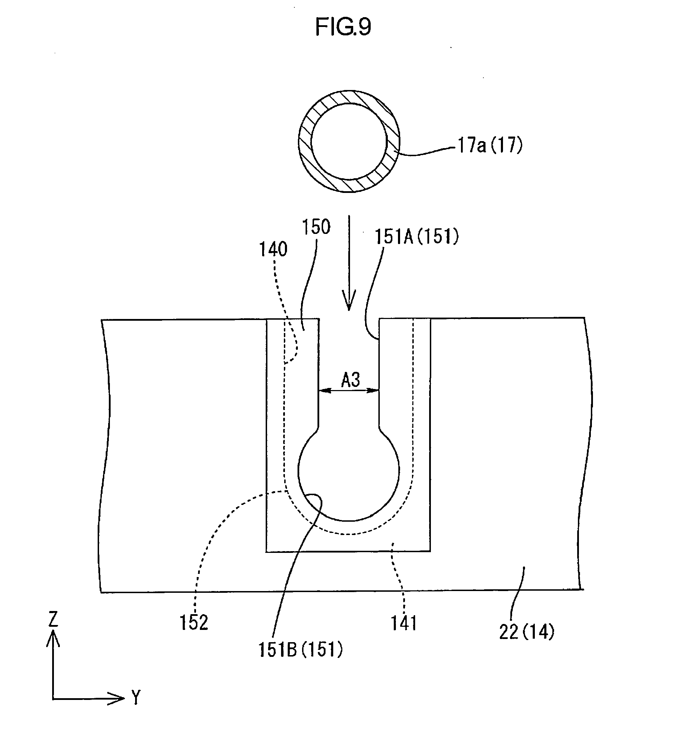

Embodiment 2 of the present invention is described with reference to Fig. 9. In this embodiment, the configurations of a heat dissipation member and a through hole (a tube attachment section) are different from those of Embodiment 1. Parts identical to those of Embodiment 1 are denoted by the same reference signs, and redundant description is not repeated here. A rectangular heat dissipation member 150 one size larger than a cutout 140 is attached to the cutout 140. At a portion of the outer circumference surface of the heat dissipation member 150 that faces an edge 141 of the cutout 140, a fitting groove 152 configured to fit in with a hole edge 141 of the cutout 140 is concavely provided. The fitting groove is fit in with the edge 141 of the cutout 140 and accordingly the heat dissipation member 150 is attached to the chassis 14.

The heat dissipation member 150 has a tube insertion hole 151 formed inside. The tube insertion hole 151 is formed by cutting out an outer marginal portion of the heat dissipation member 150 from the front side in a direction crossing the axial direction of the hot cathode tube 17 (Z-axis direction) . The tube insertion hole 151 is composed of a groove section 151A and a circular section 151B that communicates with the groove section 151A. A width A3 (a length in the Y-axis direction) of the groove section 151A is set smaller than the outer diameter of the hot cathode tube 17, and the inner diameter of the circular section 151B is set to a diameter substantially equal to the outer diameter of the hot cathode tube 17. Additionally, the heat dissipation member 150 is, as in the case of Embodiment 1, made of silicone rubber and is elastically deformable in a direction such that the width A3 of the groove section 151A widens (both rightward and leftward in FIG. 9).

Note that, in this embodiment, although the deeper part (the lower part in Fig. 9) of the cutout 140 has a substantially semicircular shape corresponding to the shape of the circular section 151B, the heat dissipation member 150 is configured to have a rectangular shape. This increases an area through which the fitting groove 152 of the heat dissipation member 150 and the edge 141 of the cutout 140 of the chassis 14 fit in with each other (in other words, the contacting area between the heat dissipation member 150 and the chassis 14) and improves heat conduction from the heat dissipation member 150 to the chassis 14. As a result, heat dissipation performance from the hot cathode tube 17 to the chassis 14 is improved.

With the above configuration in this embodiment, the hot cathode tube 17 (the glass tube 17a) is attached to the tube insertion hole 151 of the heat dissipation member 150 after the heat dissipation member 150 is attached to the cutout 140 of the chassis 14. Specifically, if the glass tube 17a is inserted into the groove section 151A from the state in FIG. 9, the inner surface of the groove section 151A is pressed by the glass tube 17a and elastically deforms in a direction such that the width of the groove section 151A is expanded (both rightward and leftward in FIG. 9) . If the glass tube 17a is further inserted into the groove section 151A and reaches the circular section 151B, the groove section 151A elastically returns to the original state of the width A3. The glass tube 17a is thereby attached to the inside of the circular section 151B. Note that, in the state that the glass tube 17a is attached to the inside of the circular section 151B, the circumferential portions of the hot cathode tube 17 except an upper portion in FIG. 9 is in contact with the inner circumferential surface of the circular section 151B.

### <Embodiment 3>

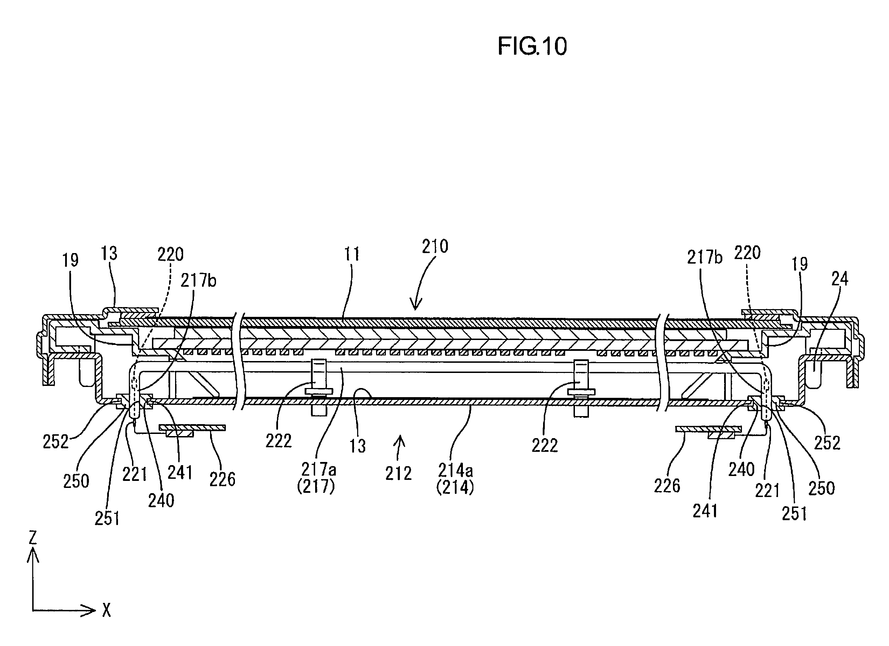

Embodiment 3 of the present invention is described with reference to Fig. 10. In a backlight unit 212 (a lighting device) in a liquid crystal display device 210 (a display device) of Embodiment 3 herein described, a cold cathode tube 217 is used as a discharge tube in place of the hot cathode tube 17. In each of the above embodiments, an end portion of the discharge tube (the hot cathode tube 17) is exposed from the side wall 22 of the chassis 14 and thereby exposing the power source connection section (the ferrule 17b) to the outside of the chassis. In this embodiment, an end portion of a discharge tube is projected from a bottom panel of a chassis. Note that parts identical to those of the above embodiments are denoted by the same reference signs, and redundant description is not repeated here.

A cold cathode tube 217 (a discharge tube) is housed with the longitudinal direction thereof (the axial direction) matching with a direction parallel to the long sides of the chassis 214. The cold cathode tube 217 includes a hollow, long and narrow glass tube 217a, and a pair of electrodes 220 enclosed in the inner sides of both end sections 217b of the glass tube 217a. In the glass tube 217a, each of the end sections 217b on both sides is bent backward, and is U-shaped as a whole. Mercury, rare gas and the like are enclosed in the glass tube 217a and a fluorescence material is applied to the inner wall surface thereof. The end sections 217b of the glass tube 217a are provided with lead terminals 221 (power source connection sections) connected to electrodes 220 and projecting to the outside of the glass tube 217a.

In a bottom panel 214a of a chassis 214 (a bottom wall section of the chassis), through holes 240 are formed at positions corresponding to the end sections 217b of the glass tube 217a in a manner penetrating the bottom panel 214a in the frontward and backward direction. The respective through holes 240 have heat dissipation members 250 mounted thereon. Each of the heat dissipation members 250 has a tube insertion hole 251 formed in a manner penetrating the heat dissipation member 250 in the frontward and backward direction (vertically in FIG. 10) of the chassis 14. The respective tube insertion holes 251 are configured so that the end sections 217b of the glass tube 217a may be inserted therethrough. Note that, the cutouts 40 and 140 in Embodiments 1 and 2 described above are groove-like holes formed by cutting out marginal portions in the sidewalls 22 of the chassis 14 (a part of the holes open to the outside), the through holes 240 of this embodiment are holes (surrounded by an edge) formed by cutting out inner portion of the wall section of the chassis 214.

Each of the heat dissipation members 250 is arranged so that the inner circumferential surface thereof may be in contact with the outer circumferential surface of the cold cathode tube 217 at a position between corresponding ones of the electrodes 220 and the lead terminals 221. This results in a configuration where the lead terminals 221 are exposed to the outside of the chassis 214. Note that each of the heat dissipation members 250 has substantially the same configuration as the heat dissipation member 50 of Embodiment 1. Specifically, the heat dissipation member 250 has an annular shape, and has a fitting groove 252 formed all over the circumference of the outer circumferential surface thereof. The fitting groove 252 is fit in with a hole edge 241 of the through hole 240 and thereby the heat dissipation member 250 is attached to the chassis 214.

The electrodes 220 of the cold cathode tube 217 are connected via the lead terminals 221 to inverter boards 226 (power sources) attached to the outer side of the bottom panel 14a of the chassis 14, whereby driving of the cold cathode tube 217 is made controllable. Note that the outer diameter size of the cold cathode tube 217 is set small as compared to the outer diameter size (e.g., around 15.5 mm) of the hot cathode tube 17 shown in Embodiment 1, and set to, for example, about 4 mm. Further, the chassis 214 is provided with lamp clips 222, and the central section (a portion along a direction parallel to the long sides of the chassis 214) of the glass tube 217a is gripped by gripping sections thereof, whereby the cold cathode tube 217 can be held with respect to the chassis 214.

Also in the backlight unit 212 of this embodiment, the lead terminals 221 are exposed to the outside of the chassis 214, and each of the heat dissipation members 250 is interposed between a corresponding one of the through holes 240 and the cold cathode tube 217. Therefore, it is possible to prevent the temperature of the coldest spot from rising at the time of having the cold cathode tube 217 switched on, and to prevent decrease in brightness that accompanies heating up of the coldest spot. Further, this embodiment uses a configuration where the end sections 217b of the cold cathode tube 217 are projected on the back side of the chassis 214. As compared to a configuration where the end sections 217b project from sidewalls, this makes it possible to reduce the length of the backlight unit 212 in the planar direction thereof (a direction parallel to the long sides or the short sides thereof).

Further, the cold cathode tube 217 is used as a discharge tube. This extends the life of the light source and also dimming is carried out easily.

### <Embodiment 4>

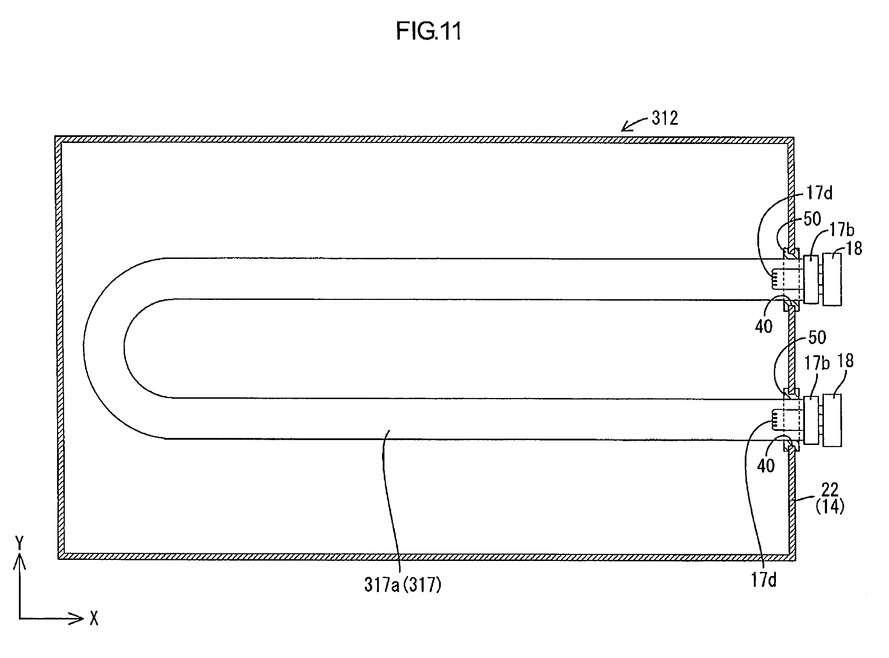

Embodiment 4 of the present invention is described with reference to Fig. 11. In a backlight unit 312 of this embodiment, the shape of a hot cathode tube is different from those of the above respective embodiments. Parts identical to those of the above embodiments are denoted by the same reference signs, and redundant description is not repeated here. A hot cathode tube 317 in this embodiment is a U-shaped tube. A glass tube 317a (a tube section) is U-shaped in a plan view (in a view from the front side of the chassis 14).

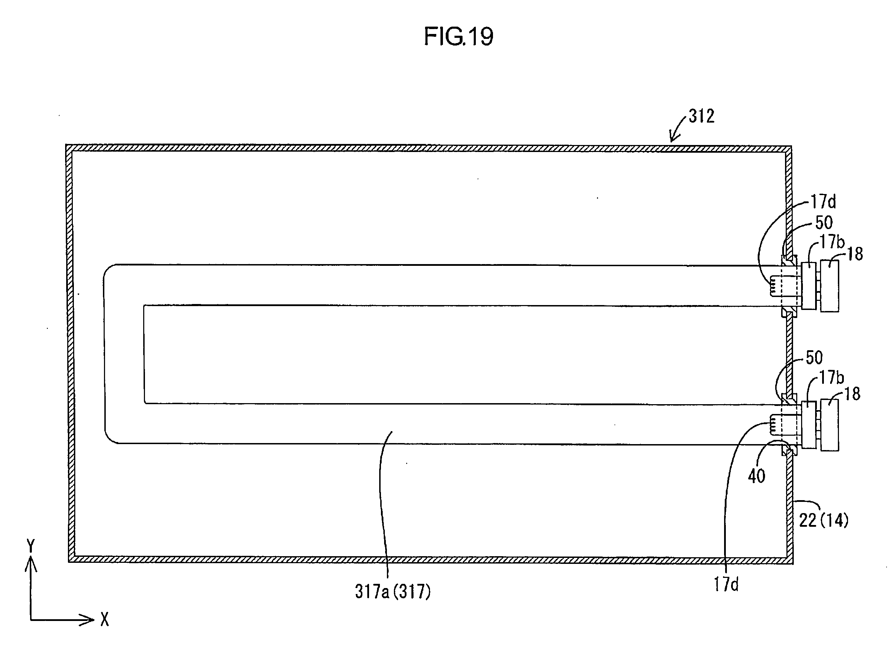

In the sidewall 22 on one side (e.g., the right side of Fig. 11) of the chassis 14, which is one of the sidewalls 22 on both sides in the X-axis direction thereof, the cutouts 40 are formed corresponding to both ends of the hot cathode tube 317. The respective end sections of the glass tube 317a are attached to the respective cutouts 40 via the respective heat dissipation members 50. Both of the ferrules 17b of the hot cathode tube 317 are thereby projected and exposed to the outside of the chassis 14. The operation and effect obtained by exposing the ferrules 17b are similar to those in each of the above described embodiments, and description thereof is not repeated here. Note that, as shown in Fig. 19, the shape of the glass tube 317a may have a U-shape. With using the U-shaped hot cathode tube 317, the glass tube 317a can be attached to the chassis 14 only on one end of the chassis 14, and this improves workability.

### <Embodiment 5>

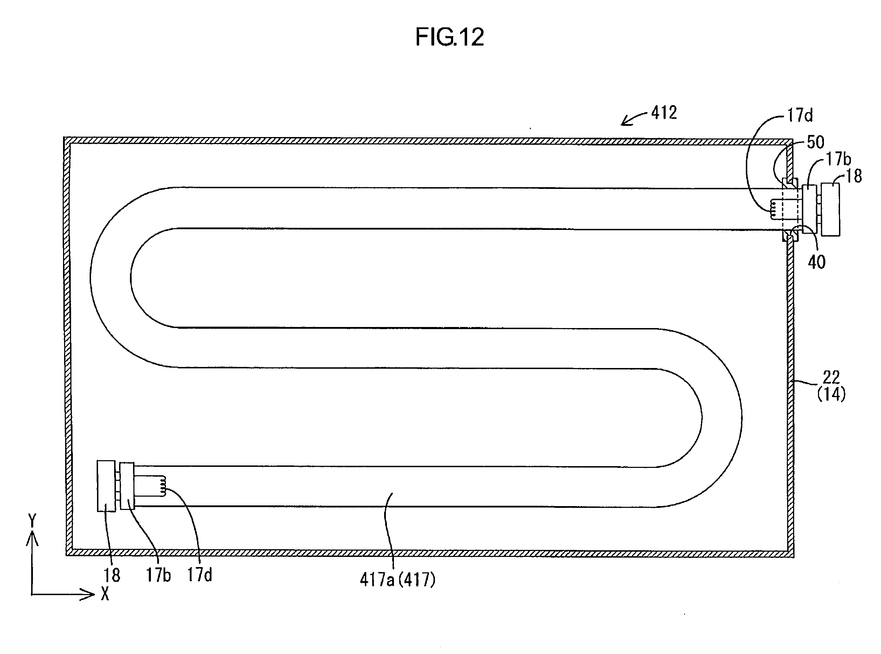

Embodiment 5 of the present invention is described with reference to Fig. 12. In a backlight unit 412 of this embodiment, the shape of a hot cathode tube is different from those of the above respective embodiments. Parts identical to those of the above embodiments are denoted by the same reference signs, and redundant description is not repeated here. A hot cathode tube 417 in this embodiment is a sigmoid tube, and the shape of a glass tube 417a has a sigmoid shape (a meandering shape) in a plan view (in a view from the front side of the chassis 14).

In the sidewall 22 on one side (e.g., the right side of Fig. 12) of the chassis 14, which is one of the sidewalls 22 on opposite sides in the X-axis direction thereof, the cutout 40 is formed corresponding to one end of the hot cathode tube 417. The end section of the glass tube 417a is attached to the cutout 40 via the heat dissipation member 50. The ferrule 17b of the hot cathode tube 417 is thereby projected and exposed to the outside of the chassis 14. The effects obtained by exposing the ferrule 17b are similar to those in the above described embodiments, description thereof is not repeated here. It is only required that the glass tube 417a has a meandering shape, not limited to the sigmoid shape. Alternatively, the configuration may be such that the respective ferrules 17b at both ends of the hot cathode tube 417 may be exposed to the outside of the chassis. As compared to a case where the glass tube 417a having a straight shape is used, only one hot cathode tube 417 including the glass tube 417a having a meandering shape occupies a greater arrangement area of the hot cathode tube 417 in the chassis 14.

### <Embodiment 6>

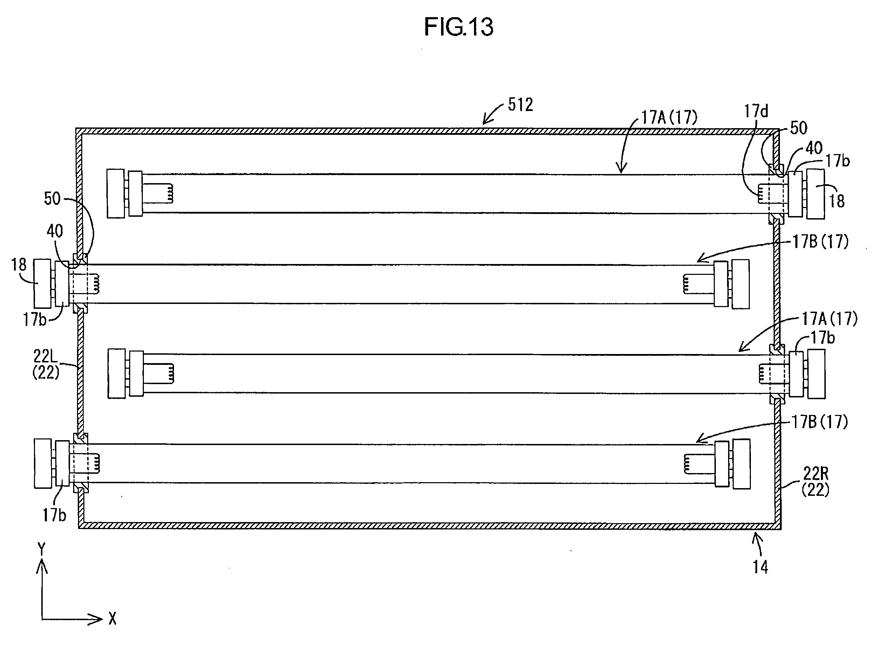

Embodiment 6 of the present invention is described with reference to Fig. 13. Parts identical to those of the above embodiments are denoted by the same reference signs, and redundant description is not repeated here. In the chassis 14 of a backlight unit 512 of this embodiment, a plurality of (e.g., four) hot cathode tubes 17 is arranged in parallel with each other in the Y-axis direction. The respective hot cathode tubes 17 are arranged in parallel to the axial directions thereof agreeing with the X-axis direction. The ferrules 17b of the hot cathode tubes 17 project from different side of the chassis.

Specifically, the first and third hot cathode tubes 17 (first discharge tubes 17A) from the top in Fig. 13 are exposed to the outside of the chassis 14 with the ferrules 17b thereof projecting from one end (the right side in Fig. 13) of the chassis 14 in the direction (the X-axis direction; the width direction) parallel to the long sides thereof. That is, in the hot cathode tubes 17A, the ferrules 17b at the one end project from the right sidewall 22 (22R).

On the other hand, the second and fourth hot cathode tubes 17 from the top in FIG. 13 (second discharge tubes 17B) are exposed to the outside of the chassis 14 with the ferrules 17b thereof projecting from the other end (the left side in FIG. 13) of the chassis 14 in the direction parallel to the long sides (the width direction) thereof. That is, in the hot cathode tubes 17B, the ferrules 17b at the one end project from the left sidewall 22 (22R) . In this embodiment, the hot cathode tubes 17A and the hot cathode tubes 17B are arranged alternately in the Y-axis direction. Note that a direction along which the hot cathode tubes 17 are arranged in parallel with each other is not limited to the Y-axis direction, and the hot cathode tubes 17 may be arranged in parallel with each other, for example, in the X-axis direction. In a case where the hot cathode tubes 17 are arranged in parallel with each other in the X-axis direction, it is only required that the above mentioned width direction of the chassis 14 be changed to, for example, the direction parallel to the short sides (the Y-axis direction) of the chassis 14.

### <Embodiment 7>

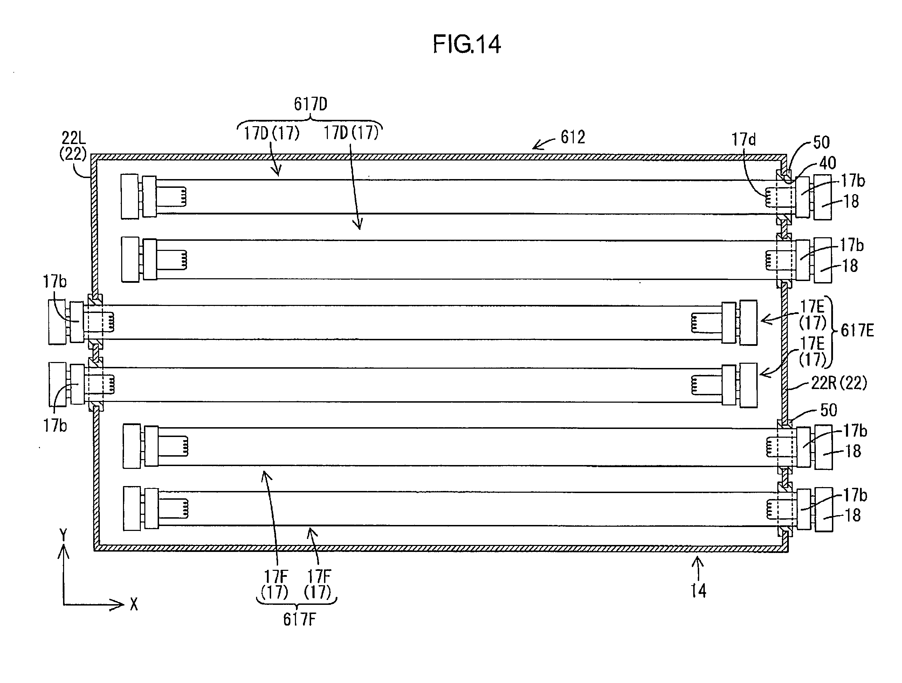

Embodiment 7 of the present invention will be described with reference to Fig. 14. Parts identical to those of the above embodiments are denoted by the same reference signs, and redundant description is not repeated here. In the chassis 14 of a backlight unit 612 of this embodiment, the plurality of (e.g., six) hot cathode tubes 17 is arranged in parallel with each other in the Y-axis direction. The respective hot cathode tubes 17 are arranged in parallel to the axial directions thereof agreeing with the X-axis direction. Additionally, directions toward which the ferrules 17b project are various among groups each including the hot cathode tubes 17 (discharge tube groups) that are next to one another.

Specifically, a group of the first and second hot cathode tubes 17 from the top in Fig. 14 are defined as a discharge tube group 617D (a first discharge tube group). A group of the third and the fourth hot cathode tubes 17 from the top in Fig. 14 are defined as a discharge tube group 617E (a second discharge tube group). A group of the third and fourth hot cathode tubes 17 from the top in Fig. 14 are defined a discharge tube group 617F (another first discharge tube group). The ferrules 17b of the respective hot cathode tubes 17 (denoted by reference signs 17D and 17F) of the discharge tube group 617D and the discharge tube group 617F are exposed to the outside of the chassis 14 in a manner projecting on one end (the right side in Fig. 14) of the chassis 14 in the direction parallel to the long sides (the width direction) thereof.

On the other hand, the ferrules 17b of the respective hot cathode tubes 17 (denoted by a reference sign 17E) of the second discharge tube group 617E are exposed to the outside of the chassis 14 in a manner projecting on the other end (the left side in Fig. 14) of the chassis 14 in the direction parallel to the long sides (the width direction) thereof. Additionally, the first discharge tube groups and the second discharge tube groups are arranged alternately in the Y-axis direction. Note that any group of the two or more hot cathode tubes 17 that are next to one another is applicable as each of the above described discharge tube groups, which means that the number of the hot cathode tubes 17 constituting each of the discharge tube groups may be changed as appropriate.

### <Embodiment 8>

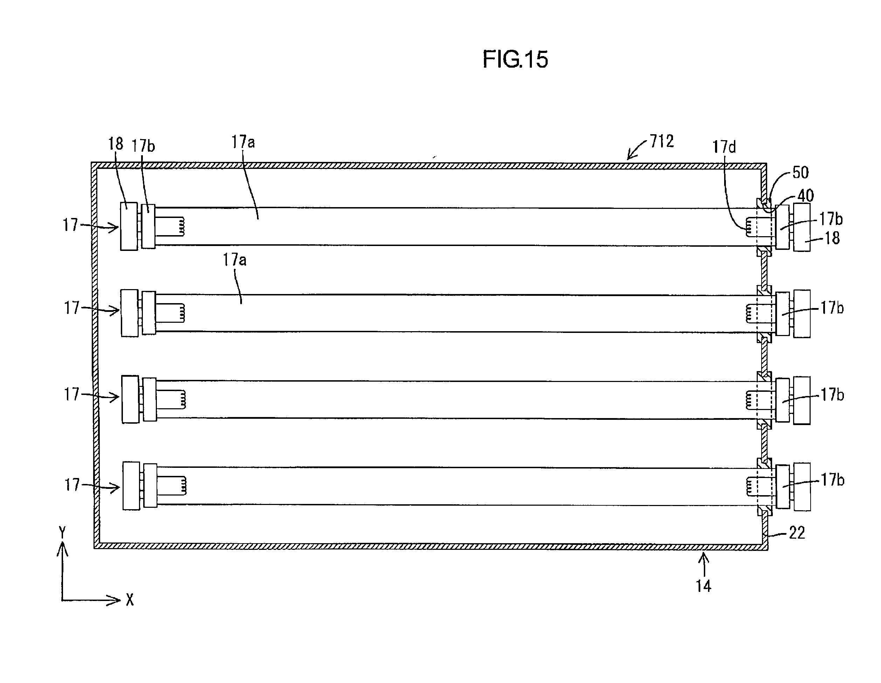

Embodiment 8 of the present invention is described with reference to Fig. 15. Parts identical to those of the above embodiments are denoted by the same reference signs, and redundant description is not repeated here. In the chassis 14 of a backlight unit 712 of this embodiment, a plurality of (e.g., four) hot cathode tubes 17 is arranged in parallel with each other in the Y-axis direction. The hot cathode tubes 17 are arranged in parallel to one another with the axial directions thereof matching with the X-axis. The ferrules 17b of the respective hot cathode tubes 17 are exposed to the outside of the chassis 14 with projecting from one end of the chassis 14 (in the right side of Fig. 15) in the direction parallel to the long sides (the width direction) thereof. In other words, the ferrules 17b exposed to the outside of the chassis 14 are provided on only one end of the chassis 14.

### <Embodiment 9>

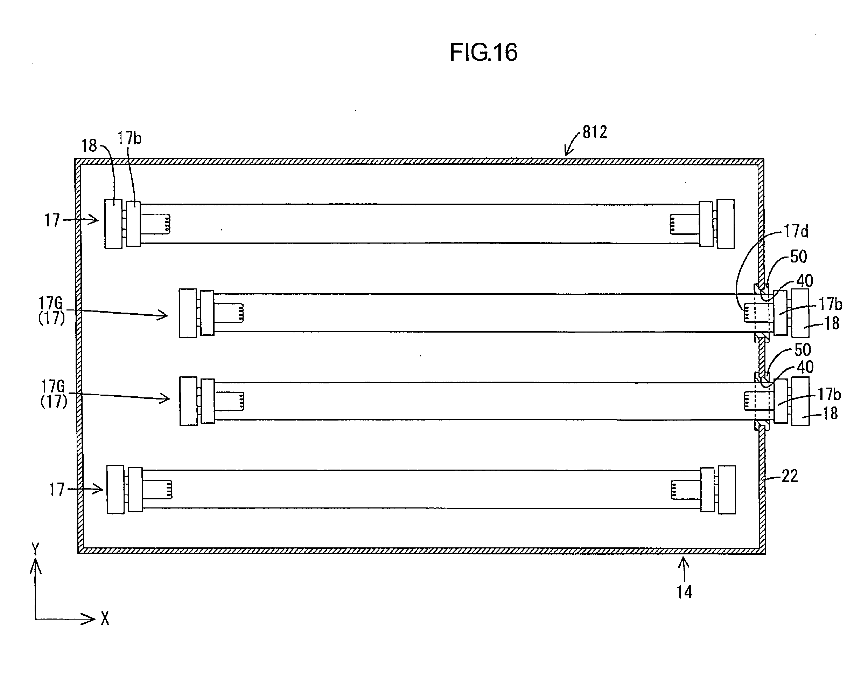

Embodiment 9 of the present invention is described with reference to Fig. 16. Parts identical to those of the above embodiments are denoted by the same reference signs, and redundant description is not repeated here. In a backlight unit 812 of this embodiment, a plurality of (e.g., four) hot cathode tubes 17 is arranged in parallel with each other in the chassis 14. The hot cathode tubes 17 are arranged in parallel to one another with the axial directions thereof matching with the X-axis. In this embodiment, only the ferrules 17b of the hot cathode tubes 17 (17G) that are arranged in the middle portion of chassis in an arrangement direction (the Y-axis direction) along which the plurality of hot cathode tubes 17 are exposed to the outside of the chassis 14. In a case where the plurality of hot cathode tubes 17 is arranged in parallel with each other, heat from the hot cathode tubes 17 tends to gather in, and raises the temperature of the middle portion of the chassis 14 in the arrangement direction of the hot cathode tubes 17. Therefore, it is particularly effective to prevent increase in temperature of the coldest spot by exposing the ferrules 17b in the hot cathode tubes 17G arranged in the middle portion.

Note that a condition where some of the hot cathode tubes 17 are arranged in the middle portion of the chassis in the arrangement direction of the hot cathode tubes (e.g., the Y-axis direction) implies a condition where other hot cathode tubes 17 are arranged on either sides of the hot cathode tubes 17G. Additionally, the number of the hot cathode tubes 17G arranged in the middle portion may be changed as appropriate.

### <Other embodiment>

The present invention is not limited to the above embodiments explained in the above description and drawings. The following embodiments may be included in the technical scope of the present invention, for example.

(1) Although a configuration where a discharge tube is attached to a wall section of a chassis is given as an example in each of the above described embodiments, it is not always necessary to attach a discharge tube to a wall section of a chassis. It is only required that the power source connection section of the discharge tube be exposed to the outside of the chassis. A position at which the discharge tube is attached, and means used for attaching the discharge tube may be changed as appropriate. Additionally, it is only required that at least a part of the power source connection section be exposed to the outside of the chassis.

(2) Although silicone rubber is used as the material of the heat dissipation member in the above described embodiment, the present invention is not limited to this. The material of the heat dissipation member may be changed as appropriate. Note that a material having a high thermal conductivity is preferable as the material of the heat dissipation member.

(3) Embodiment 1 described above assumes the configuration where the heat dissipation member 50 is in contact with the outer circumferential surface of the glass tube 17a at a position between the filament 17d and the ferrule 17b. However, the heat dissipation member 50 may be in contact with the ferrule 17b.

(4) Any cutout that penetrates the chassis and through which a discharge tube can be inserted is applicable as the cutout or the through hole in each of the above described embodiments. Also, the shape thereof may be changed as appropriate.

(5) In Embodiment 1 described above, although the configuration where the hot cathode tube 17 is provided in a manner extending in a direction parallel to the long sides (the X-axis direction) of the chassis 14 is shown, the hot cathode tube 17 may be provided in a manner extending in a direction parallel to the short sides (the Y-axis direction) of the chassis 14. In a case where this configuration is used, it is only required that the configuration be such that the ferrules 17b of the hot cathode tube 17 are projected from the sidewalls on both sides of the chassis 14 in the direction parallel to the short sides thereof.

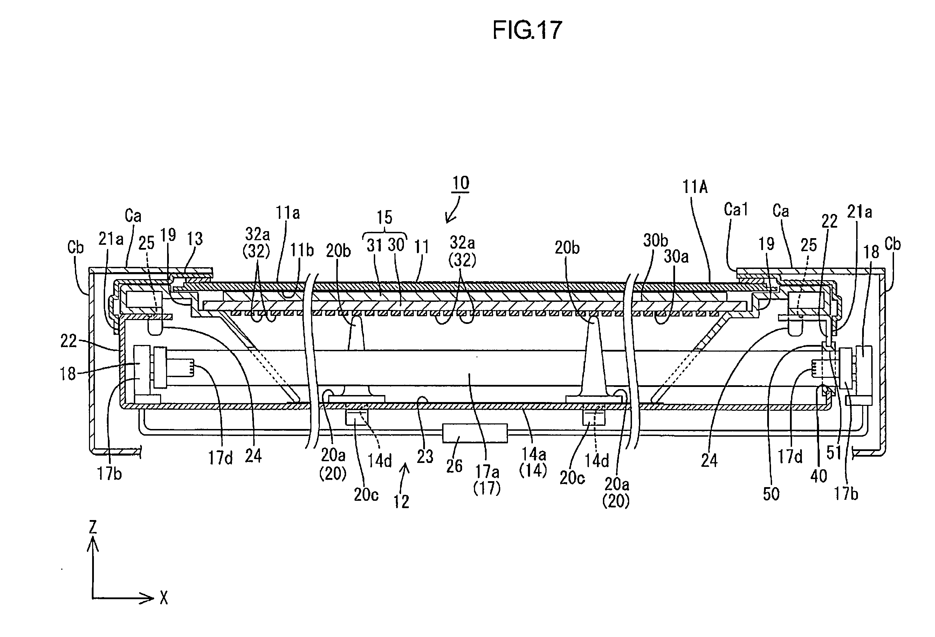

(6) Embodiment 1 described above assumes the configuration where the ferrules 17b on both sides of the hot cathode tube 17 are exposed to the outside of the chassis 14. Alternatively, as shown in FIG. 17, only the ferrule 17b at one end thereof may be exposed to the outside of the chassis 14.

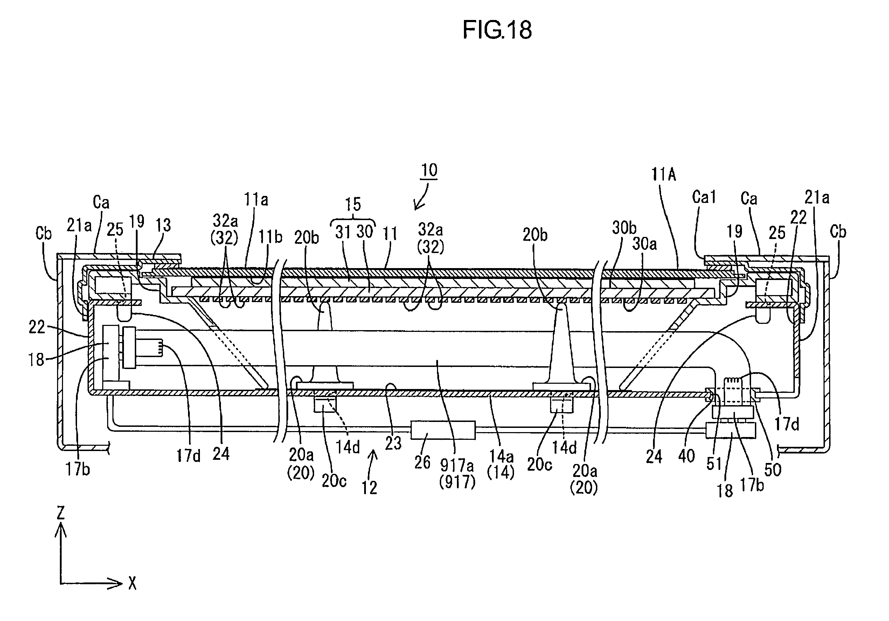

(7) In the Embodiment 3, the discharge tube (the cold cathode tube 217) is U-shaped and the power source connection sections on both sides of the discharge tube project and are exposed from the bottom panel 214a of the chassis 214. The present invention is not limited to this, and as shown in Fig. 18, a glass tube 917a of a discharge tube (a hot cathode tube 917) may be made L-shaped and only the ferrule 17b at one end thereof projects from the bottom panel 14a of the chassis 14.

(8) In each of Embodiments 6 to 9 described above, the number of the hot cathode tubes 17 may be changed as appropriate. Additionally, a direction along which the hot cathode tubes 17 are arranged in parallel with each other is not limited to the Y-axis direction, and may be changed as appropriate.

(9) In the above embodiments, the hot cathode tube 17 or the cold cathode tube 217 is used as a discharge tube. However, a discharge tube (xenon tubes) of another type may be used as the discharge tube.

(10) One kind of light source is used in the above described embodiments. However, a plurality kinds of light source may be used in the present invention. For example, a cold cathode tube and a hot cathode tube may be used in combination. Additionally, each of the above described embodiments that use a hot cathode tube may use a cold cathode tube in place thereof, whereas Embodiment 3 described above may use a hot cathode tube in place of a cold cathode tube.

(11) The liquid crystal panel and the chassis are provided in a vertical position with the short sides thereof matching with the vertical direction in the above described embodiments. However, the liquid crystal panel and the chassis may be provided in a vertical position with the long sides thereof matching with the vertical direction.

(12) Although a TFT is used as each switching component of the liquid crystal display device in each of the above described embodiments, the present invention is applicable also to liquid crystal display devices using switching components (e.g., thin-film diodes (TFDs)) other than TFTs, and to liquid crystal display devices, such as liquid crystal display devices that provide monochrome display, other than those that provide color display.

(13) Although a liquid crystal display device using a liquid crystal panel as a display panel is shown as an example in each of the above described embodiment, the present invention is also applicable to the display device using other types of display panels.

(14) Although a television receiver including a tuner is given as an example in each of the above described embodiments, the present invention is applicable also to a display device not including a tuner.

### EXPLANATION OF SYMBOLS

10, 210: Liquid crystal display device (Display device)
11: Liquid crystal panel (Display panel)
12, 212, 312, 412, 512, 612, 712, 812: Backlight unit (Lighting device)
14, 214: Chassis
17, 317, 417, 917: Hot cathode tube (Discharge tube)
17A: Hot cathode tube (First discharge tube)
17B: Hot cathode tube (Second discharge tube)
17G: Hot cathode tube (Discharge tube arranged in central part of the direction of arranging discharge tubes)
17a, 217a, 317a, 417a, 917a: Glass tube (Tube section)
17b: Ferrule (Power source connection section)
17d: Filament (Electrode)
22: Sidewall (Sidewall section of chassis)
26, 226: Inverter board (Power source)
40, 140, 240: Cutout (Tube attachment section)
41, 141, 241: Hole edge
50, 150, 250: Heat dissipation member
51, 151, 251: Tube insertion hole
52, 152, 252: Fitting groove
214a: Bottom panel (Bottom wall section of chassis)
217: Cold cathode tube (Discharge tube)
220: Electrode
221: Lead terminal (Power source connection section)
TV: Television receiver
617D, 617F: Discharge tube group (First discharge tube group)
617E: Discharge tube group (Second discharge tube group)

## Claims

1. A lighting device comprising:
a discharge tube;
a chassis configured to house the discharge tube; and
a power source configured to supply driving power to the discharge tube,
wherein the discharge tube includes a tube section, an electrode arranged inside the tube section, and a power source connection section connecting the electrode and the power source to each other;
the power source connection section is exposed to outside of the chassis;
the lighting device further includes a heat dissipation member configured to dissipate heat from the tube section to the chassis, the heat dissipation member being provided between the tube section and the chassis and in contact with an outer circumferential surface of the tube section at a portion between the electrode and the power source connection section.

2. The lighting device according to claim 1, wherein:
the power source connection section includes a plurality of power source sections each of which is attached to each of two ends of the tube section in an axial direction thereof; and
the power source connection section provided on at least one of the two ends of the tube section is exposed to the outside of the chassis.

3. The lighting device according to any one of claims 1 and 2, wherein:
the discharge tube includes a plurality of discharge tubes that is arranged in parallel with each other in the chassis, and the discharge tubes include first discharge tubes and second discharge tubes;
each power source connection section provided on one end of each first discharge tube is projected from one end of the chassis in a width direction of the chassis and exposed to the outside of the chassis;
each power source connection section provided on another end of each second discharge tube is projected from another end of the chassis in the width direction of the chassis and exposed to the outside of the chassis; and
the first discharge tubes and the second discharge tubes are alternately arranged in parallel with each other.

4. The lighting device according to any one of claims 1 and 2, wherein:
the discharge tube includes a plurality of discharge tubes that is arranged in parallel with each other in the chassis; and,
the discharge tubes include a plurality of discharge tube groups each including at least two adjacent discharge tubes;
the discharge tube groups include a first discharge tube group and a second discharge tube group, and the first discharge tube group and the second discharge tube group are alternately arranged in parallel with each other;
the power source connection sections of the first discharge tube group that are provided on one ends of the discharge tubes of the first discharge tube group project from one end of the chassis in a width direction of the chassis and are exposed to the outside of the chassis; and
the power source connection sections of the second discharge tube group that are provided on anther ends of the discharge tubes of the second discharge tube group project from another end of the chassis in the width direction and are exposed to the outside of the chassis.

5. The lighting device according to any one of claims 1 and 2, wherein:
the discharge tube includes a plurality of discharge tubes that is arranged in parallel with each other in the chassis; and
each power source connection section of each of the discharge tubes projects from one end of the chassis in a width direction of the chassis and is exposed to the outside of the chassis.

6. The lighting device according to any one of claims 1 and 2, wherein:
the discharge tube includes a plurality of discharge tubes that is arranged in parallel with each other in the chassis; and,
the power source connection section of only the discharge tube arranged in a middle portion of the chassis in an arrangement direction of the discharge tubes is exposed to the outside of the chassis.

7. The lighting device according to claim 2, wherein each of the power source connection sections provided on the two ends of the discharge tube is exposed to the outside of the chassis.

8. The lighting device according to any one of claims 1 to 7, wherein the tube section is substantially L-shaped.

9. The lighting device according to any one of claims 1 to 7, wherein the tube section is substantially U-shaped.

10. The lighting device according to any one of claims 1 to 7, wherein the tube section has a meandering shape.

11. The lighting device according to any one of claims 1 to 10, wherein:
the chassis has a cutout that penetrates a wall section of the chassis;
the cutout is provided as a tube attachment section to receive the tube section therethrough; and
the heat dissipation member is provided between the tube section and an edge of the cutout.

12. The lighting device according to claim 11, wherein the cutout is formed in a sidewall section of the wall section of the chassis.

13. The lighting device according to any one of claims 1 and 2, wherein:
the chassis has a cutout that penetrates a bottom wall section of the chassis;
the cutout is provided as a tube attachment section to receive the tube section penetrating the cutout; and
the heat dissipation member is provided between the tube section and an edge of the cutout.

14. The lighting device according to any one of claims 11 to 13, wherein the heat dissipation member has a fitting groove configured to fit to the edge of the cutout.

15. The lighting device according to any one of claims 1 to 14, wherein the heat dissipation member has a tube insertion hole that penetrates the heat dissipation member in an axial direction of the tube section.

16. The lighting device according to claim 15, wherein the tube insertion hole is formed by cutting out an outer marginal portion of the heat dissipation member in a direction crossing the axial direction of the tube section.

17. The lighting device according to any one of claims 1 to 16, wherein the heat dissipation member is made of silicone rubber.

18. The lighting device according to any one of claims 1 to 17, wherein the discharge tube is a hot cathode tube.

19. The lighting device according to any one of claims 1 to 17, wherein the discharge tube is a cold cathode tube.

20. A display device comprising:
the lighting device according to any one of claims 1 to 19; and
a display panel configured to provide display by using light from the lighting device.

21. The display device according to claim 20, wherein the display panel is a liquid crystal panel using liquid crystal.

22. A television receiver comprising a display device according to one of claims 20 and 21.
